# EUROPEAN PATENT SPECIFICATION

(11) **EP 2 207 363 B1**
(45) Date of publication and mention of the grant of the patent: **31.10.2012**
(21) Application number: 09150432.4
(22) Date of filing: 13.01.2009
(51) Int. Cl.: H04Q 3/00

(54) **Electronic apparatus, intelligent network and intelligent network implemented data processing method**
Elektronisches Gerät, intelligentes Netz und in einem intelligenten Netz implementiertes Datenverarbeitungsverfahren
Appareil électronique, réseau intelligent et procédé de traitement de données mis en oeuvre dans le réseau intelligent

(43) Date of publication of application: 14.07.2010
(73) Proprietor: Orga Systems GmbH, 33104 Paderborn (DE)
(72) Inventor: Balmosan, Aurel, 33102 Paderborn (DE); Hannesen, Gert, 33161 Hövelhof (DE); Schwöppe, Thomas, 33102 Paderborn (DE)
(74) Representative: Richardt Patentanwälte GbR

(56) References cited:
- SMETANIUK B: "Distributed operation of the X.500 directory" COMPUTER NETWORKS AND ISDN SYSTEMS, NORTH HOLLAND PUBLISHING. AMSTERDAM, NL, vol. 21, 1991, pages 17-40, XP024236404 ISSN: 0169-7552 [retrieved on 1991-03-01]
- CHATRAS B ET AL: "Protocols for Remote Data Management in Intelligent Networks CS1" IEEE INTELLIGENT NETWORK '94 WORKSHOP RECORD, IEEE, 1994, XP010300935
- YOSHIMI M ET AL: "Data transfer between SDFs without interrupting service execution" PROCEEDINGS OF 4TH INTERNATIONAL CONFERENCE ON INTELLIGENCE IN NETWORKS, BORDEAUX, FRANCE, 25 November 1996 (1996-11-25), - 28 November 1996 (1996-11-28) pages 108-113, XP008107289

## Description

The present invention relates to the field of electronic apparatuses for data storage and retrieval, and in particular to intelligent networks, and more particularly to a service data point and an intelligent network implemented data processing method.

The intelligent network (IN) technology is as such known from the prior art and has been standardized, such as by the International Telecommunication Union that issued the standards named Q.1210 to Q.1219 which also became known as capability set 1 (CS-1). An example of a special form of implementation of an IN is the advanced intelligent network (AIN) which has also been standardized.

An IN contains a service control point (SCP). The SCP is also referred to as service control function (SCF). Further, the IN contains a service data point (SDP) which is also referred to as service data function (SDF). The SDP may be implemented by a separate component or by the same component as the SCP.

US 6,687,366 B1 shows an intelligent routing method for handling a large number of subscribers in an IN. The method requires an intelligent router for routing requests from the SCP to one of the SDPs of the intelligent network.

Similar arrangements are e.g. disclosed in:
- SMETANIUK B: "Distributed operation of the X.500 directory", COMPUTER NETWORKS AND ISDN SYSTEMS, NORTH HOLLAND PUBLISHING, AMSTERDAM, NL, vol. 21, 1991, pages 17-40, XP024236404, ISSN: 0169-7552, and in
- CHATRAS B ET AL: "Protocols for Remote Data Management in Intelligent Networks CS1", IEEE INTELLIGENT NETWORK 94 WORKSHOP RECORD, IEEE, 1994, XP010300935.

The present invention aims to provide an improved electronic apparatus, such as a service data point, an intelligent network, an intelligent network implemented data processing method and a computer program product.

The invention provides for an electronic apparatus as claimed in claim 1 and a service data point as claimed in claim 8. Embodiments of electronic apparatuses and service data points of the invention are given in the dependent claims. Further, the invention provides an intelligent network, an intelligent network implemented data processing method and a computer program product as claimed in the further independent claims.

Embodiments of the invention are particularly advantageous for applications where data is stored in a distributed way on a plurality of networked nodes. Such applications include, but are not limited to, storage area networks (SANs) and factory automation networks. A particular advantage of embodiments of the invention is that no central and/or replicated register is necessary for the data storage and retrieval.

For example, each node of an electronic apparatus of the invention constitutes a node of a SAN. For data retrieval any one of the nodes of the SAN can receive an information request that is forwarded to all other nodes of the SAN by means of a broadcast message, if the requested data specified in the information request can not be retrieved by the node that received the information request. For example, a computer system that needs to retrieve data from the SAN can send the information request to any one of the nodes of the electronic apparatus.

Likewise, each node of an electronic apparatus of the invention can constitute a node of a factory automation network where automation data, such as control data and/or measurement data, is stored by the individual nodes. The nodes can include actuators, sensors and other automation components. For example, a control unit of the factory automation network that needs to retrieve data from the electronic apparatus can send the information request to any one of the nodes of the electronic apparatus.

Embodiments of the invention are particularly advantageous for intelligent network applications as the effort for configuring the service data point is minimized. In particular, a central instance, such as an intelligent router, is not required which has the further advantage of avoiding a single point of failure. Another advantage is scalability of the SDP as nodes can be added to the SDP as the number of subscribers grows.

In accordance with an embodiment of the invention the response messages from each one of the other nodes contain the data, if any, that has been retrieved as a result of the database query that has been performed by the respective one of the other nodes in response to the broadcast message. Alternatively, the response messages do not directly contain the data, but a locator that indicates where the data is stored such that the node that sent the broadcast message can access the data using the received locator. The locator can be implemented by a uniform resource locator (URL).

### Brief description of the drawings

In the following embodiments of the invention are described in greater detail by way of example only making reference to the drawings in which:
- Figure 1: is a block diagram showing a first embodiment of an intelligent network and a service data point,
- Figure 2: is a block diagram of a further embodiment of a service data point,
- Figure 3: is a block diagram of one of the nodes of an embodiment of a service data point,
- Figure 4: is a flowchart illustrating an embodiment of a method of the invention,
- Figure 5: is an UML diagram illustrating a further embodiment of a method of the invention.

### Detailed description

Throughout the following description the same reference numerals are used to designate like elements that perform the same or similar functions.

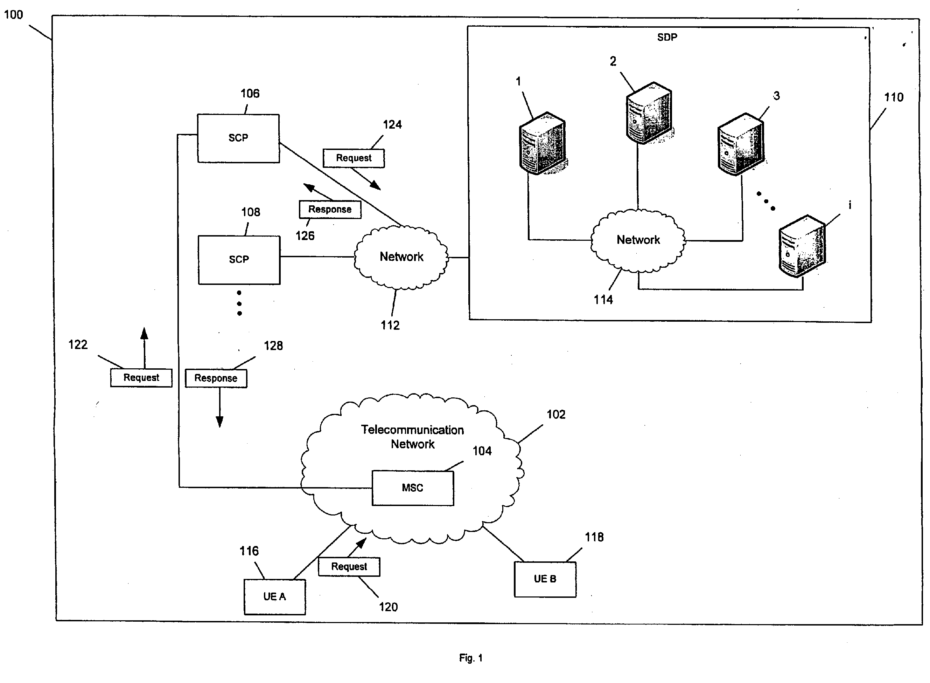

Fig. 1 shows a block diagram of an intelligent network (IN) 100. The IN 100 comprises a telecommunication network 102. The telecommunication network 102 can be a fixed and/or mobile telecommunication network providing various telecommunication services to its subscribers. For example, the telecommunication network 102 is a digital wireless cellular telecommunication network, such as in accordance with the GSM standard. The telecommunication network 102 has a switching center 104 that is implemented as a mobile switching center (MSC) if the GSM standard is used.

The IN has at least one SCP 106. There can be more than one SCP, such as an additional SCP 108. In the example considered here the MSC 104 is coupled to the SCP 106. Another MSC of the telecommunication network 102 (not shown in Fig. 1) can be coupled to the SCP 108.

The SCP 106 and the SCP 108 are coupled to the SDP 110 via a network 112.

The SDP 110 contains a plurality of nodes 1, 2, 3, ... i. The nodes of the SDP 110 are coupled by a network 114. The networks 112 and 114 can be implemented by separate networks or by a single network, such as a local area network, a bus system or the like.

By way of example, the user equipment (UE) of a subscriber A 116 and the UE 118 of a subscriber B are depicted in fig. 1. When subscriber A requires the provision of a telecommunication service from the telecommunication network 102 a request 120 is sent from the UE 116 to the telecommunication network 102 where it is processed by the MSC 104. The request 120 contains a specification of the desired telecommunication service and an identifier of the subscriber A, which is referred to in the following as ID A. If the requested telecommunication service involves another subscriber, such as the subscriber B, the ID B of that other subscriber is also specified in the request 120.

In response to the request 120 the MSC 104 generates a request 122 and sends the request 122 to the SCP to which it is assigned, i.e. to the SCP 106. The request 122 contains at least the ID A and also the ID B, if the requested telecommunication service involves subscriber B in addition to subscriber A.

In response to the request 122 the SCP 106 generates a request 124 that contains at least the IDs received with the request 122 from the MSC 104 by the SCP 106. The request 124 is sent from the SCP 106 via the network 112 to one of the nodes of the SDP 110.

In a first implementation the SCP 106 is assigned to one of the nodes of the SDP 110, such as to node 1. In this instance the SCP 106 sends the request 124 to the node to which it is assigned, i.e. to the node 1.

In another implementation the SCP is not assigned to any one of the nodes of the SDP 110. In this instance the node of the SDP 110 to which the SCP 106 sends its request 124 is determined randomly by the SCP 106.

In another implementation the SCP is assigned to a subset of the nodes of the SDP 110. This subset contains two or more of the nodes of the SDP 100. The SCP 108 is assigned to another subset of the nodes, wherein the subset of the nodes to which the SCP 106 is assigned and the subset of the nodes to which the SCP 108 is assigned are disjunct. However, it is also possible, that different SCPs are assigned to the same subsets of nodes or to subsets of nodes having common nodes.

In another implementation the SCP 106 implements a load balancing scheme for balancing the load of the nodes of the SDP 110 to which it is assigned. For example, the SCP 106 is assigned to a subset of the nodes and implements an arbitration scheme, such as a round robin scheme, for balancing the loads of the nodes of this subset. For example, the SCP 106 is assigned to the subset containing the nodes 1, 2 and 3. In this instance, the first request 124 is sent to the node 1 and subsequent requests are sent to the nodes 2, 3, 1, 2, 3, 1, ... etc. in the order determined by this round robin scheme.

In response to the request 124 the SDP 110 generates a response 126 that is returned by the SDP 110 to the requesting SCP 106. The SCP 106 uses the response 126 to generate a response 128 using the data contained in the response 126 and returns the response 128 to the MSC 104. The MSC 104 may then provide the requested telecommunication service to the subscriber A depending on the content of the response 128.

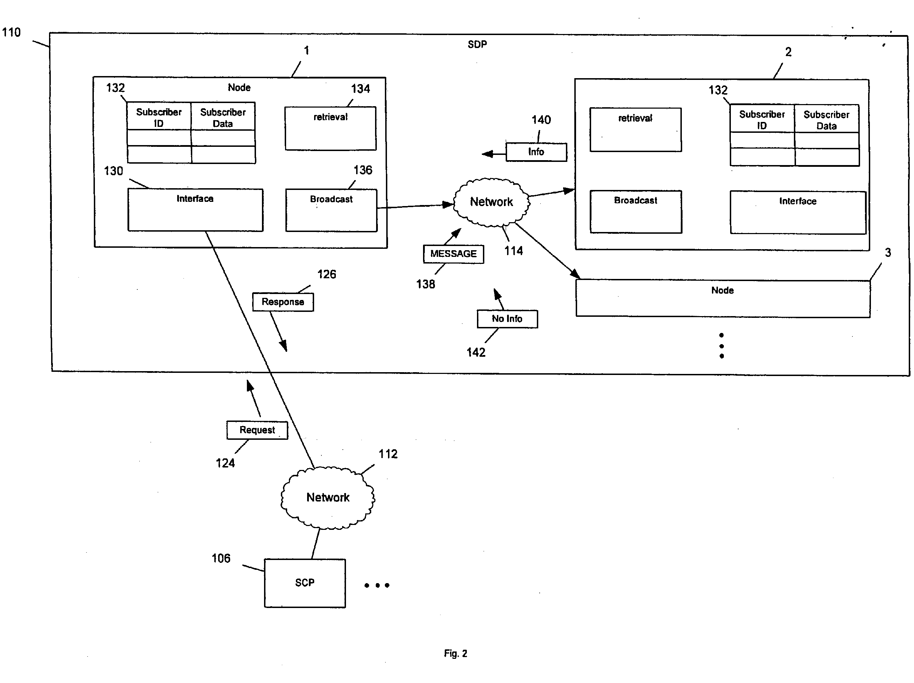

Fig. 2 shows a more detailed embodiment of the SDP 110.

Each one of the nodes of the SDP 110 has an interface 130 for receiving requests from the SCPs, such as request 124 from the SCP 106. By means of the interface 130 each one of the nodes is coupled to the network 112.

Each one of the nodes has a database 132 for storing subscriber data. The subscriber data is stored in each one of the databases 132 using the subscriber ID as an access key. The structure of the databases 132 of the different nodes 1, 2, 3, ... i may be identical but not the contents of these databases 132. For example, the subscriber data of disjunct groups of subscribers is stored in the various databases 132.

"Subscriber data" as understood herein is any kind of data relating to a subscriber or a group of subscribers, such technical parameters or billing parameters. The technical parameters can be descriptive of technical features of the UE of a given subscriber, such as for the purposes of device management. For example, the technical parameters of the UE can be checked in order to determine whether the UE can be used for the kind of telecommunication service requested by the subscriber. For example, if the telecommunication service relates to a video download this service is only provided if the UE has a display for displaying the video. The billing parameters may indicate a current prepaid credit of a given subscriber and/or rate information, e.g. information on rebates granted to the subscriber, or blocking information, if the subscribers credit line has been exhausted.

For example, the database 132 of the node 1 contains subscriber data of a first group of subscribers, the database 132 of the node 2 contains the subscriber data of a second group of subscribers, the database 132 (not shown in fig. 2) of the node 3 contains the subscriber data of a third group of subscribers, etc, where the first, second, third ... i-th groups of subscribers are disjunct and in combination hold the subscriber data of all subscribers of the intelligent network. This has the advantage of scalability as an additional node i+1 can be added to the SDP 110 when the storage capacities of the existing databases 132 of the existing i nodes of the SDP 110 become exhausted without having to move the data that has been stored previously in the databases 132 of the nodes i.

Each one of the nodes can execute program instructions 134 that constitute a retrieval component for retrieving subscriber data from the database 132 of the same node. The retrieval is performed by querying the database 132 using the ID or the IDs received with the request 124.

Further, each node serves for execution of program instructions 136 that provide a broadcast component for generating and sending broadcast messages via the network 114 and receiving response messages from the other nodes via the network 114.

In operation, one of the nodes of the SDP 110, such as the node 1 receives the request 124 that contains the ID A. In response to the receipt of the request 124 the execution of the program instructions 134 is started by the node 1 for querying the database 132 of the node 1 using the ID A as an access key. If the subscriber data of the subscriber A is stored in the database 132 of the node 1 the query will return the required subscriber data and the node 1 generates the response 126 that contains these subscriber data. Alternatively or in addition, the node 1 may process the retrieved subscriber data and put the result of the processing of the retrieved subscriber data into the response 126.

If the database query does not return the subscriber data of subscriber A, execution of the program instructions 136 is started in order to generate a broadcast message 138. The broadcast message 138 carries at least the ID A received with the request 124. The broadcast message 138 is sent from the node 1 to all other nodes of the SDP 110 via the network 114.

When the node 2 receives the broadcast message 138, execution of the program instructions 134 is started in order to query the database 132 of that node 2 in order to retrieve the subscriber data of the subscriber identified by the identifier contained in the broadcast message 138, i.e. subscriber A in the example considered here. If the subscriber data for the ID A can be retrieved from the database 132 the node 2 generates a response message 140 that contains the retrieved subscriber data. The response message 140 is sent from the node 2 back to the node 1 from which it received the broadcast message 138 via the network 114. Alternatively the response message 140 contains the result of the database query in the form of a locator, such as a URL, that indicates where the retrieved data is stored. The node 1 can thus access the data using the locator contained in the response message 140.

If the node 2 does not retrieve the subscriber data for subscriber A from its database 132 it also generates a response message 142 that indicates, that the requested data cannot be retrieved from its database 132.

The above described processing steps that are performed by the node 2 in response to the broadcast message 138 are also carried out analogously by the other nodes 3, ... i of the SDP 110. If one of the nodes retrieves at least a portion of the requested subscriber data from its database it generates the response message 140 containing the retrieved data and if it does not retrieve such subscriber data it generates the response message 142 indicating that no subscriber data for the specified subscriber has been retrieved.

After the node 1 has been received a response message, i.e. a response message 140 or a response message 142, from each one of the other nodes of the SDP 110 it generates the response 126 using the subscriber data received from the other nodes and sends the response 126 back to the SCP 106.

In accordance with an embodiment of the invention, the broadcast message 138 is sent via the network 114 using the user datagram protocol (UDP).

In accordance with an embodiment of the invention, the nodes of the SDP 110 have real time processing capabilities. This is particularly advantageous for real time billing applications, such as for implementation of the real time billing methodologies of EP 1364332 B1 and EP 1484720 B1.

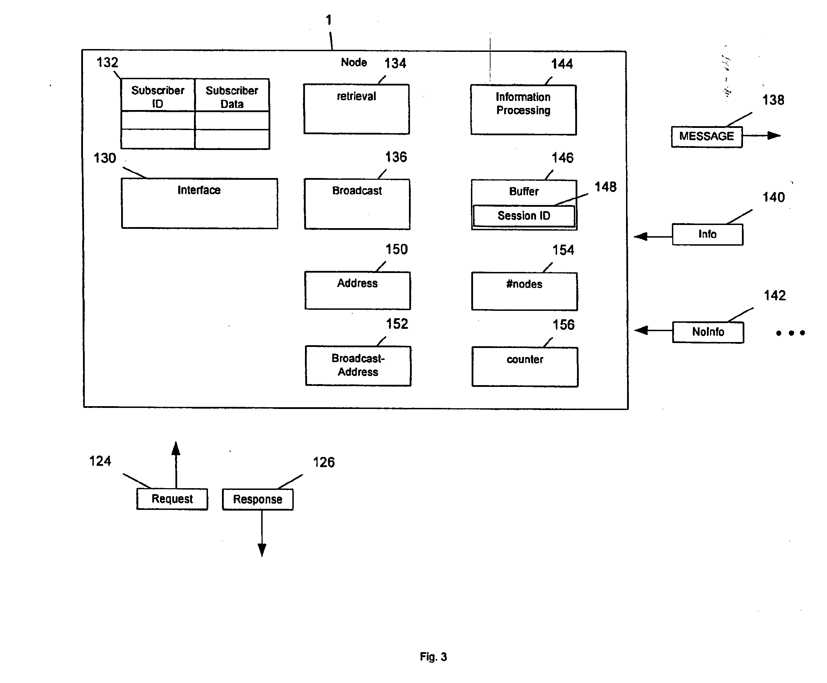

Fig. 3 shows a more detailed embodiment of one of the nodes of the SDP 110, such as node 1. It is to be noted, that preferably all the nodes of the SDP 110 are structurally identical.

In comparison with the implementation shown in fig. 2, the node 1 of the fig. 3 embodiment has the following additional components:
1. Program instructions 144 for processing the subscriber data that has been retrieved from the database 132 of the node 1 or that has been received from the other nodes in response to the broadcast message 138 in order to generate the response 126 (cf. figs. 1 and 2).
2. Storage 146 for temporarily storing the subscriber data that has been retrieved from the database 132 of the node 1 or that has been received from the other nodes in response to the broadcast message 138 and/or for storing a copy of the response 126; a session identifier 148 that is assigned to the request 124 by the node 1 is also stored in the storage 146.
3. Storage area 150 for storing an address that is assigned to the node 1; this address is used by the SCP 106 to send the request 124 to the node 1; the address stored in the storage area 150 is different for each one of the nodes of the SDP 110 such that each node is unequivocally identified by its address within the SDP 110.
4. Storage area 152 for storing a broadcast address; the broadcast address is identical for all the nodes of the SDP 110. The broadcast address specified in the storage area 152 is used for sending the broadcast message 138 such as by means of the UDP to all of the other nodes of the SDP 110.
5. Storage area 154 for storing the number i of nodes that are contained within the SDP 110; the storage area 154 can be accessed by an administrator in order to update the number i when a node is added or removed from the SDP.
6. A counter 156 for counting the number of response messages 140 and 142 that are received by the node 1 in response to the broadcast message 138.

In operation, the node 1 may receive the request 124 that is directed to the address of the node 1 specified in its storage area 150. By execution of the program instructions 134 a query is performed in database 132 of the node 1 in order to retrieve subscriber data related to the subscriber identified by the request 124.

If the subscriber data is retrieved from the database 132 of the node 1, the response 126 is generated by execution of the program instructions 144 by the node 1. Further, a session identifier (ID) 148 is assigned to the request 124 by the node 1. This session ID 148 is also put into the response 126 and communicated back to the requesting SCP. A copy of the subscriber data retrieved from the database 132 and/or a copy of the response 126 is stored in the storage 146 together with the assigned session ID 148.

The assignment of the session ID 148 to the request 124 has performance advantages when a subsequent request is received from the SCP 106 relating to the ongoing provision of the requested telecommunication service to the subscriber A. In this instance the subsequent request can specify the session ID 148. The node 1 can then check the storage 146 for the presence of data assigned to the session ID 148 for generating a further response to the subsequent request.

If the required subscriber data cannot be retrieved from the database 132 by the node 1, execution of the program instructions 136 is invoked. The broadcast message 138 is sent to the broadcast address specified in the storage area 152 which is identical for all the nodes of the SDP 110. The broadcast message 138 carries the subscriber identifier ID A that is received with the request 124.

In response to the broadcast message 138, the node 1 receives a response message 140 from one of the other nodes containing at least a portion of the required subscriber data. Further, the node 1 receives response messages 142 from other nodes of the SDP 110 that indicate that these nodes did not retrieve the required subscriber data or a portion of it from their respective local databases 132.

The counter 156 is incremented each time a response message 140 or 142 is received by the node 1 from any one of the other nodes. The node 1 compares the counter value of the counter 156 to the total number of nodes specified in the storage area 154. When the counter value of the counter 156 indicates that a number of i-1 response messages 140, 142 has been received from the other nodes of the SDP 110 this implies, that all the other nodes have responded to the broadcast message 138. This further implies, that the required subscriber data has been received by the node 1 such that the response 126 can be generated by execution of the program instructions 144 provided that the subscriber has been registered. If all i-1 response message indicate that data for the subscriber that is specified in the information request 124 can not be retrieved this implies that there is no such subscriber, i.e. "subscriber not found".

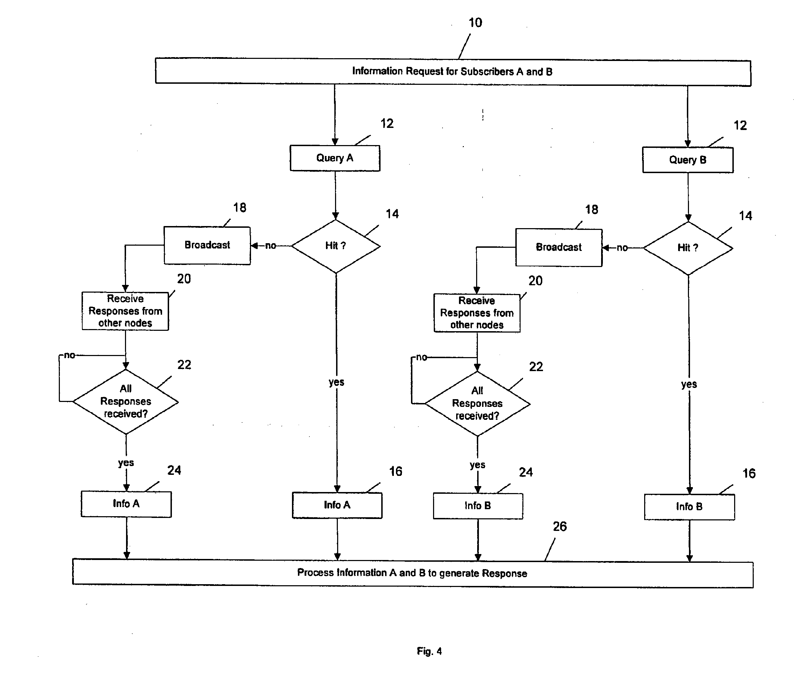

Fig. 4 shows a flowchart of an embodiment of a method of the invention. In step 10 the information request 124 is received by the SDP 110 (cf. the embodiments of figs. 1, 2 and 3). In the embodiment considered here the information request 124 carries the ID A and ID B of the subscribers A and B as subscriber A desires to call the subscriber B such as by entering B's telephone number into the UE 116.

For retrieval of the subscriber data of the subscriber A that is required for establishing the desired telephone link a query is performed in step 12 by the node that has received the request 124, e.g. by node 1. Hence, the database 132 of the node 1 is queried using the ID A as a query criterion in order to retrieve the subscriber data of subscriber A.

In step 14 it is decided whether the query did return the required subscriber data, in which case there is a 'hit', or not. In case there was a hit, the retrieved data is returned in step 16 from the retrieval component of the node; otherwise the broadcast message 138 is generated and sent to all the other nodes in the step 18. In the following step 20 the node that sent the broadcast message 138 in step 18, i.e. the node 1 in the example considered here, waits for all the other nodes to return their responses 140, 142.

In step 22 a determination is made whether a response has been received from each one of the other nodes. After a response has been received from each one of the other nodes the required subscriber data of the subscriber A is returned in step 24 by the broadcast component of the node 1 for further processing.

The same steps 12 to 24 are also carried out by the node 1 with respect to the ID B in order to retrieve the subscriber data of subscriber B. The steps 12 to 24 for retrieval of the subscriber data for the subscriber B can be performed in parallel or subsequent to the execution of the steps 12 to 24 for retrieval of the subscriber data of subscriber A.

In step 26 the subscriber data of subscribers A and B is processed by the node 1 for generating the response 126.

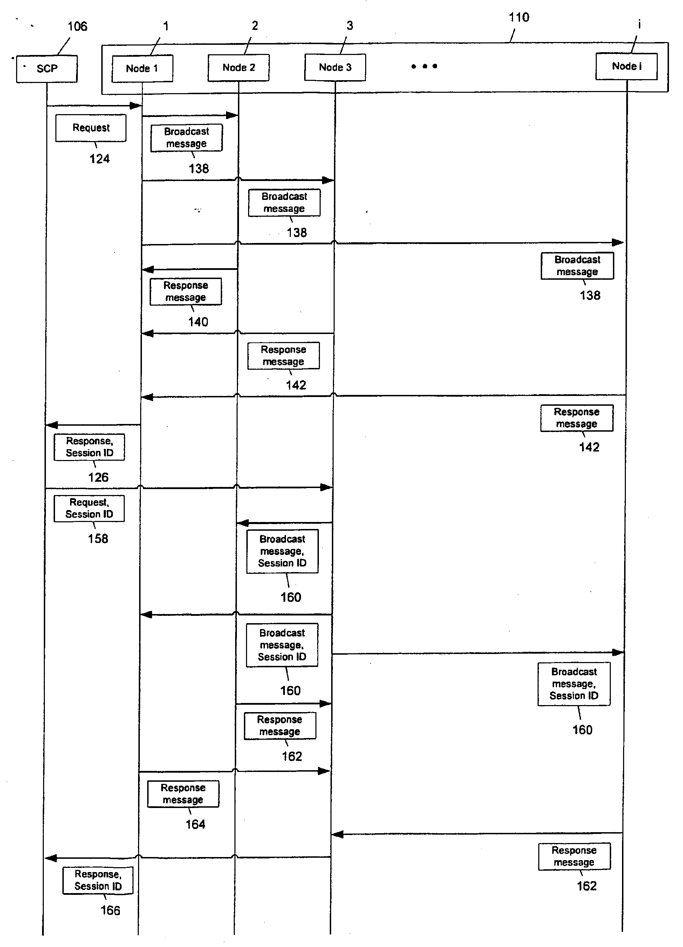

Fig. 5 shows a diagram illustrating a further embodiment of the method of the invention. In this embodiment the SCP 106 sends the request 124 to the node 1 of the SDP 110. Alternatively, the SCP 106 can send the request 124 to any other node of the SDP 110 but it is assumed here without restriction of generality that the request 124 is sent to the node 1 for convenience of explanation only.

Assuming that there is no database hit in the database 132 of the node 1, the node 1 sends the broadcast messages 138 to all the other nodes within the SDP 110. Assuming that there is a database hit within the database 132 of the node 2, the node 2 responds with the response message 140 and all the other nodes respond with response messages 142 indicating that there is no database hit in the respective local databases 132.

After the node 1 has received either a response 140 or a response 142 from all of the i-1 other nodes, the node 1 generates the response 126 that contains the retrieved data and/or the result of the processing of the retrieved data by the node 1 and/or a session identifier that has been assigned by the node 1 to the request 124 and the respective telecommunication service session to which it refers. The node 1 stores a copy of the retrieved subscriber data and/or a copy of the response 126 within its buffer (cf. storage 146 of fig. 3) assigning the session ID to what is stored in the buffer.

During the ongoing usage of the telecommunication service the SCP 106 may send a further request 158 that carries the session ID. The request 158 can be sent to any one of the nodes of the SDP 110. For convenience of explanation only and without restriction of generality it is assumed here that the request 158 is sent from the SCP 106 to the node 3. In response to receipt of the request 158 the node 3 checks its buffer for the presence of data to which a session ID is assigned that matches the session ID indicated in the request 158.

As no such data is stored in the buffer of the node 3, the node 3 sends a broadcast message 160 to all other nodes. The broadcast message 160 carries the session ID received with the request 158. In response to receipt of the broadcast message 160 each one of the receiving nodes checks its buffer for the presence of data having an assigned session ID that matches the session ID specified in the broadcast message 160.

If there is no such match in a given node a response message 162 is sent back by that node indicating that the required data is not buffered in that node; if the contrary is the case, a response message 164 is generated containing the content of the buffer of that node. In the example considered here the node 1 thus returns the response message 164 to the node 3 in order to provide the required content of its buffer to the node 3 whereas all the other nodes return response messages 162 indicating that no matching session ID was locally identified.

The node 3 uses the data received with the response message 164 for generating a response 166 which it returns to the SCP 106 in response to the request 158.

In accordance with an embodiment of the invention the SCP stores an identifier of the node of the SDP 110 to which it has sent the first request 124 of the session in its local memory, i.e. the node identifier "1" for identification of the node 1 in the example considered here. The SCP 106 then sends the further request 158 to the node of the SDP 110 that is identified by the node identifier stored in its local memory as well as all following requests 158 that belong to the same session, i.e. the request 158 is also sent to node 1. After the session is over the node identifier can be erased from the local memory.

Hence, the request 124 and any subsequent requests belonging to the same session are always sent from the SCP to the same node of the SDP 110. For example, each SCP stores a table in its local memory assigning such a node identifier to each ongoing session. This embodiment is particularly advantageous as it avoids a need to retrieve the session context for subsequent requests.

Embodiments of the present invention are particularly advantageous as the SDP 110 is 'multi-headed' due to the fact that any one of its nodes can serve as entry points for entry of a request from anyone of the SCPs of the intelligent network. As a consequence, the distribution of the subscriber data over the nodes of the SDP 110 does not need to be configured in the SCPs of the IN.

Further, embodiments of the invention are particularly advantageous as there is only a minimal configuration effort for adding or removing a node from the SDP. For instance, adding an additional node only requires to update the number of nodes stored in the storage area 154 of the nodes and to enter the common broadcast address into the storage area 152 of the node that is added.

**List of Reference Numerals**

| | |
|---|---|
| 1 | Node |
| 2 | Node |
| 3 | Node |
| 100 | Intelligent network (IN) |
| 102 | Telecommunication network |
| 104 | Mobile switching center (MSC) |
| 106 | Service control point (SCP) |
| 108 | Service control point (SCP) |
| 110 | Service data point (SDP) |
| 112 | Network |
| 114 | Network |
| 116 | User equipment (UE) |
| 118 | User equipment (UE) |
| 120 | Request |
| 122 | Request |
| 124 | Request |
| 126 | Response |
| 128 | Response |
| 130 | Interface |
| 132 | Database |
| 134 | Program instructions |
| 136 | Program instructions |
| 138 | Broadcast message |
| 140 | Response message |
| 142 | Response message |
| 144 | Program instructions |
| 146 | Storage |
| 148 | Session identifier (ID) |
| 150 | Storage area |
| 152 | Storage area |
| 154 | Storage area |
| 156 | Counter |
| 158 | Request |
| 160 | Broadcast message |
| 162 | Response message |
| 164 | Response message |
| 166 | Response |

## Claims

1. An electronic apparatus, the electronic apparatus (110) comprising a plurality of nodes (1, 2, 3, ..., i) being coupled by a network (114), each node of the plurality of nodes comprising:
- means (130) for receiving an information request (124), the information request carrying an identifier,
- a database (132) for storing data,
- information retrieval means (134) for querying the database using the identifier,
- broadcast means (136) for sending a broadcast message (138) to all other nodes of the plurality of nodes, the broadcast message carrying the identifier,
each one of the nodes of the plurality of nodes being adapted to receive a response message (140, 142) from each one of the other nodes, each one of the response messages containing a result of a database query that has been performed by the respective one of the other nodes in response to the broadcast message,
each one of the nodes being further adapted to generate a response (126) to the information request, wherein the response (126) of one of the nodes is generated using the response messages (140, 142) or using a result of a database query that has been performed by the information retrieval means of the one of the nodes,
each one of the nodes being adapted to receive the broadcast message (138) from any one of the other nodes, the information retrieval means of each one of the nodes being adapted to query the database of its node in response to receipt of the broadcast message (138) using the identifier and for generating one of the response messages (140, 142), each one of the nodes comprising storage means (154) for storing data being indicative of the total number of the nodes, each node further comprising a counter (156) for counting the number of response messages (140, 142) received from the other nodes, wherein the response (126) is only generated after the counter indicates that a response message (140, 142) has been received from each one of the other nodes.

2. The electronic apparatus of claim 1, wherein each one of the response messages (140, 142) carries at least a portion of the requested data or indicates that no data has been retrieved from the respective database.

3. The electronic apparatus of claim 1 or 2, wherein all of the nodes have identical broadcast addresses (152), wherein the broadcast message is directed to the broadcast address of the nodes.

4. The electronic apparatus of any one of the preceding claims, each one of the nodes comprising storage means (146) for temporarily storing the retrieved data, a result of processing (144) of the retrieved data and/or the response (126).

5. The electronic apparatus of any one of the preceding claims, each one of the nodes comprising means for generating a first session identifier (148) in response to the information request (124), wherein the response (126) contains the first session identifier, wherein the first session identifier is stored in the storage means (146), each one of the nodes being operable to receive a subsequent information request (158), the subsequent information request containing a second session identifier, each one of the nodes being operable to check if the first and the second session identifiers are identical using the first session identifier stored in the storage means and to send a further broadcast message (160) to all other nodes, if the first and the second session identifiers are not identical, the further broadcast message (160) carrying the second session identifier, each one of the nodes being operable to access its storage means (146) to check for the presence of the first session identifier being identical to the second session identifier and to generate a response message (164) carrying the content of the storage means, if the first and second identifiers are identical and to generate a response message (162) indicating that the first and second identifiers are not identical or that no identifier is assigned to the content of the storage means (146), wherein the response messages (162, 164) are returned to the one of the nodes that has sent the further broadcast message (160) such that the one of the nodes generates a subsequent response (166) using the response message (164).

6. The electronic apparatus of any one of the preceding claims, each one of the nodes having real time capability and/or the broadcast message being broadcasted using the user datagram protocol.

7. The electronic apparatus of any one of the preceding claims, the electronic apparatus being a service data point for an intelligent network, the means (130) for receiving the information request (124) being adapted to receive the information request from a service control point (106) of the intelligent network, the identifier being indicative of at least one subscriber (116, 118) of the intelligent network, the data being subscriber data.

8. An intelligent network comprising a plurality of service control points (106, 108) and at least one service data point (110) as claimed in claim 7, the at least one service control point being coupled to the service data point.

9. The intelligent network of claim 8, the service control point being permanently assigned to one of the nodes of the service data point.

10. The intelligent network of claim 8, the service control point being assigned to a subset of the nodes of the service data point, the service control point being adapted to select one of the nodes of the subset and to send the information request to the selected one of the nodes.

11. The intelligent network of claim 10, the service control point further comprising load balancing means for performing the selection of the one of the nodes from the subset.

## Patentansprüche

1. Elektronische Vorrichtung, wobei die elektronische Vorrichtung (110) eine Vielzahl von Knoten (1, 2, 3, ..., i) aufweist, die durch ein Netzwerk (114) gekoppelt sind, wobei jeder Knoten der Vielzahl von Knoten Folgendes aufweist:
- eine Einrichtung (130) zum Empfangen einer Informationsanfrage (124), wobei die Informationsanfrage einen Identifikator trägt,
- eine Datenbank (132) zum Speichern von Daten,
- eine Informationsrückgewinnungseinrichtung (134) zum Abfragen der Datenbank unter Verwendung des Identifikators,
- eine Broadcast-Einrichtung (136) zum Senden einer Broadcast-Nachricht (138) an alle anderen Knoten der Vielzahl von Knoten, wobei die Broadcast-Nachricht den Identifikator trägt,
wobei jeder der Knoten der Vielzahl von Knoten ausgeführt ist, um von jedem der anderen Knoten eine Antwortnachricht (140, 142) zu empfangen, wobei die Antwortnachrichten jeweils ein Ergebnis einer Datenbankabfrage enthalten, die von dem jeweiligen der anderen Knoten als Reaktion auf die Broadcast-Nachricht durchgeführt wurde,
wobei jeder der Knoten ferner zum Generieren einer Antwort (126) auf die Informationsanfrage ausgeführt ist, wobei die Antwort (126) von einem der Knoten unter Verwendung der Antwortnachrichten (140, 142) oder unter Verwendung eines Ergebnisses einer Datenbankabfrage, die von der Informationsrückgewinnungseinrichtung des einen der Knoten durchgeführt wurde, generiert wird,
wobei jeder der Knoten ausgeführt ist, um die Broadcast-Nachricht (138) von einem beliebigen der anderen Knoten zu empfangen, wobei die Informationsrückgewinnungseinrichtung von jedem der Knoten zum Abfragen der Datenbank ihres Knotens als Reaktion auf den Empfang der Broadcast-Nachricht (138) unter Verwendung des Identifikators und zum Generieren einer der Antwortnachrichten (140, 142) ausgeführt ist, wobei die Knoten jeweils eine Speichereinrichtung (154) zum Speichern von Daten, die die Gesamtzahl der Knoten erkennen lassen, aufweist, wobei jeder Knoten ferner einen Zähler (156) zum Zählen der Zahl der Antwortnachrichten (140, 142) aufweist, die er von den anderen Knoten empfangen hat, wobei die Antwort (126) erst generiert wird, wenn der Zähler anzeigt, dass eine Antwortnachricht (140, 142) von jedem der anderen Knoten empfangen worden ist.

2. Elektronische Vorrichtung nach Anspruch 1, wobei jede der Antwortnachrichten (140, 142) wenigstens einen Teil der angeforderten Daten trägt oder anzeigt, dass keine Daten aus der jeweiligen Datenbank abgerufen wurden.

3. Elektronische Vorrichtung nach Anspruch 1 oder 2, wobei alle Knoten identische Broadcast-Adressen (152) haben, wobei die Broadcast-Nachricht an die Broadcast-Adresse der Knoten gerichtet ist.

4. Elektronische Vorrichtung nach einem der vorhergehenden Ansprüche, wobei jeder der Knoten eine Speichereinrichtung (146) zum vorübergehenden Speichern der abgerufenen Daten, eines Ergebnisses der Bearbeitung (144) der abgerufenen Daten und/oder die Antwort (126) aufweist.

5. Elektronische Vorrichtung nach einem der vorhergehenden Ansprüche, wobei jeder der Knoten eine Einrichtung zum Generieren eines ersten Sitzungsidentifikators (148) als Reaktion auf die Informationsanfrage (124) aufweist, wobei die Antwort (126) den ersten Sitzungsidentifikator enthält, wobei der erste Sitzungsidentifikator in der Speichereinrichtung (146) gespeichert wird, wobei jeder der Knoten zum Empfangen einer nachfolgenden Informationsanfrage (158) funktionell ist, wobei die nachfolgende Informationsanfrage einen zweiten Sitzungsidentifikator enthält, wobei jeder der Knoten funktionell ist, um mithilfe des in der Speichereinrichtung gespeicherten ersten Sitzungsidentifikators zu prüfen, ob der erste und der zweite Sitzungsidentifikator identisch sind, und um eine weitere Broadcast-Nachricht (160) an alle anderen Knoten zu senden, wenn der erste und der zweite Sitzungsidentifikator nicht identisch sind, wobei die weitere Broadcast-Nachricht (160) den zweiten Sitzungsidentifikator trägt, wobei jeder der Knoten funktionell ist, um auf seine Speichereinrichtung (146) zuzugreifen, um sie auf die Anwesenheit des ersten Sitzungsidentifikators, der mit dem zweiten Sitzungsidentifikator identisch ist, zu prüfen und eine Antwortnachricht (164) zu generieren, die den Inhalt der Speichereinrichtung trägt, wenn der erste und der zweite Identifikator identisch sind, und eine Antwortnachricht (162) zu generieren, die anzeigt, dass der erste und der zweite Identifikator nicht identisch sind oder dass dem Inhalt der Speichereinrichtung (146) kein Identifikator zugeteilt wurde, wobei die Antwortnachrichten (162, 164) zu dem einem der Knoten zurückgesendet werden, der die weitere Broadcast-Nachricht (160) gesendet hat, so dass der eine der Knoten unter Verwendung der Antwortnachricht (164) eine nachfolgende Antwort (166) generiert.

6. Elektronische Vorrichtung nach einem der vorhergehenden Ansprüche, wobei jeder der Knoten Echtzeit-fähig ist und/oder die Broadcast-Nachricht unter Verwendung des Benutzerdatenpaketprotokolls gesendet wird.

7. Elektronische Vorrichtung nach einem der vorhergehenden Ansprüche, wobei die elektronische Vorrichtung ein Service Data Point für ein intelligentes Netzwerk ist, wobei die Einrichtung (130) zum Empfangen der Informationsanfrage (124) zum Empfangen der Informationsanfrage von einem Service Control Point (106) des intelligenten Netzwerks ausgeführt ist, wobei der Indikator wenigstens einen Teilnehmer (116, 118) des intelligenten Netzwerks anzeigt, wobei die Daten Teilnehmerdaten sind.

8. Intelligentes Netzwerk, das eine Vielzahl von Service Control Points (106, 108) und wenigstens einen Service Data Point (110) nach Anspruch 7 aufweist, wobei der wenigstens eine Service Control Point mit dem Service Data Point gekoppelt ist.

9. Intelligentes Netzwerk nach Anspruch 8, wobei der Service Control Point einem der Knoten des Service Data Points permanent zugewiesen ist.

10. Intelligentes Netzwerk nach Anspruch 8, wobei der Service Control Point einem Teilsatz der Knoten des Service Data Points zugewiesen ist, wobei der Service Control Point zum Auswählen von einem der Knoten des Teilsatzes und zum Senden der Informationsanfrage an den ausgewählten der Knoten ausgeführt ist.

11. Intelligentes Netzwerk nach Anspruch 10, wobei der Service Control Point ferner eine Lastverteilungseinrichtung zum Durchführen der Auswahl des einen der Knoten aus dem Teilsatz aufweist.

## Revendications

1. Appareil électronique, l'appareil électronique (110) comprenant une pluralité de noeuds (1, 2, 3, ..., i) qui sont couplés par un réseau (114), chaque noeud de la pluralité de noeuds comprenant :
- des moyens (130) pour recevoir une requête d'informations (124), la requête d'informations portant un identificateur ;
- une base de données (132) pour stocker des données ;
- des moyens d'extraction d'informations (134) pour interroger la base de données à l'aide de l'identificateur ;
- des moyens de diffusion (136) pour envoyer un message de diffusion (138) à tous les autres noeuds de la pluralité de noeuds, le message de diffusion portant l'identificateur,
chacun des noeuds de la pluralité de noeuds étant apte à recevoir un message de réponse (140, 142) à partir de chacun des autres noeuds, chacun des messages de réponse contenant un résultat d'une interrogation de base de données qui a été effectuée par le noeud respectif des autres noeuds en réponse au message de diffusion ;
chacun des noeuds étant en outre apte à générer une réponse (126) à la requête d'informations, la réponse (126) de l'un des noeuds étant générée à l'aide des messages de réponse (140, 142) ou à l'aide d'un résultat d'une interrogation de base de données qui a été effectuée par les moyens d'extraction d'informations de l'un des noeuds ;
chacun des noeuds étant apte à recevoir le message de diffusion (138) provenant de l'un quelconque des autres noeuds, les moyens d'extraction d'informations de chacun des noeuds étant aptes à interroger la base de données de leur noeud en réponse à une réception du message de diffusion (138) à l'aide de l'identificateur et pour générer l'un des messages de réponse (140, 142), chacun des noeuds comprenant des moyens de stockage (154) pour stocker des données qui sont indicatives du nombre total des noeuds, chaque noeud comprenant en outre un compteur (156) pour compter le nombre de messages de réponse (140, 142) reçus à partir des autres noeuds, la réponse (126) étant seulement générée après que le compteur indique qu'un message de réponse (140, 142) a été reçu à partir de chacun des autres noeuds.

2. Appareil électronique selon la revendication 1, dans lequel chacun des messages de réponse (140, 142) porte au moins une partie des données requises ou indique qu'aucune donnée n'a été extraite de la base de données respective.

3. Appareil électronique selon l'une des revendications 1 ou 2, dans lequel tous les noeuds ont des adresses de diffusion identiques (152), le message de diffusion étant dirigé vers l'adresse de diffusion des noeuds.

4. Appareil électronique selon l'une quelconque des revendications précédentes, chacun des noeuds comprenant des moyens de stockage (146) pour stocker de façon temporaire les données extraites, un résultat du traitement (144) des données extraites et/ou la réponse (126).

5. Appareil électronique selon l'une quelconque des revendications précédentes, chacun des noeuds comprenant des moyens pour générer un premier identificateur de session (148) en réponse à la requête d'informations (124), la réponse (126) contenant le premier identificateur de session, le premier identificateur de session étant stocké dans les moyen de stockage (146), chacun des noeuds étant actionnable pour recevoir une requête d'informations ultérieure (158), la requête d'informations ultérieure contenant un second identificateur de session, chacun des noeuds étant actionnable pour vérifier si les premier et second identificateurs de session sont identiques à l'aide du premier identificateur de session stocké dans les moyens de stockage et pour envoyer un nouveau message de diffusion (160) à tous les autres noeuds, si les premier et second identificateurs de session ne sont pas identiques, le nouveau message de diffusion (160) portant le second identificateur de session, chacun des noeuds étant actionnable pour accéder à ses moyens de stockage (146) pour vérifier la présence du premier identificateur de session qui est identique au second identificateur de session et pour générer un message de réponse (164) portant le contenu des moyens de stockage, si les premier et second identificateurs sont identiques et pour générer un message de réponse (162) indiquant que les premier et second identificateurs ne sont pas identiques ou qu'aucun identificateur n'est attribué au contenu des moyens de stockage (146), les messages de réponse (162, 164) étant renvoyés à l'un des noeuds qui a envoyé le nouveau message de diffusion (160) de telle sorte que l'un des noeuds génère une réponse ultérieure (166) à l'aide du message de réponse (164).

6. Appareil électronique selon l'une quelconque des revendications précédentes, chacun des noeuds ayant une capacité temps réel et/ou le message de diffusion étant diffusé à l'aide du protocole UDP (User Datagram Protocol).

7. Appareil électronique selon l'une quelconque des revendications précédentes, l'appareil électronique étant un point de données de service pour un noeud intelligent, les moyens (130) pour recevoir la requête d'informations (124) étant aptes à recevoir la requête d'informations en provenance d'un point de contrôle de service (106) du réseau intelligent, l'identificateur étant indicatif d'au moins un abonné (116, 118) du réseau intelligent, les données étant des données d'abonné.

8. Réseau intelligent comprenant une pluralité de points de contrôle de service (106, 108) et au moins un point de données de service (110) selon la revendication 7, le ou les points de contrôle de service étant couplés au point de données de service.

9. Réseau intelligent selon la revendication 8, le point de contrôle de service étant attribué en permanence à l'un des noeuds du point de données de service.

10. Réseau intelligent selon la revendication 8, le point de contrôle de service étant attribué à un sous-ensemble de noeuds du point de données de service, le point de contrôle de service étant apte à sélectionner l'un des noeuds de sous-ensemble et à envoyer la requête d'informations au noeud sélectionné des noeuds.

11. Réseau intelligent selon la revendication 10, le point de contrôle de service comprenant en outre des moyens d'équilibrage de charge pour la sélection de l'un des noeuds à partir du sous-ensemble.
